Europäisches Patentamt

European Patent Office

Office européen des brevets

(19)

(11) Veröffentlichungsnummer: **0 120 105**

**A1**

(12) # EUROPÄISCHE PATENTANMELDUNG

(21) Anmeldenummer: 83102930.1

(22) Anmeldetag: 24.03.83

(51) Int. Cl.³: **B 60 K 41/00**
     B 60 K 41/16

(43) Veröffentlichungstag der Anmeldung:
     03.10.84 Patentblatt 84/40

(84) Benannte Vertragsstaaten:
     AT BE CH FR GB IT LI NL SE

(71) Anmelder: Blätte, Katherina
     Mannheimer Strasse 32
     D-6702 Bad Dürkheim(DE)

(72) Erfinder: Golfier, Willi
     Mannheimer Strasse 32
     D-6702 Bad Dürkheim(DE)

(54) Steuersystem für Behindertenkraftfahrzeuge.

(57) Um Behinderten das Fahren mit Kraftfahrzeugen zu erleichtern, sind die fußbetätigbaren Gas- und Kupplungspedale sowie der Schalthebel der Gangschaltung ersetzt durch einen Steuerhebel (1), mit dem eine Hydraulikpumpe (4) derart steuerbar ist, daß diese je nach Steuerhebelstellung Hydraulikmotoren (6), die zum Fahrzeugantrieb dienen, hinsichtlich Drehzahl und Drehrichtung steuert.

FIG. 1

EP 0 120 105 A1

0120105

# BESCHREIBUNG

Die Erfindung bezieht sich auf ein Steuersystem für Behinderten-Kraftfahrzeuge der im Oberbegriff des Patentanspruches 1 genannten Gattung.

Behinderte sind oft nicht in der Lage, in üblicher Weise Kraftfahrzeuge zu bedienen, nämlich mit dem Fuße ein oder mehrere Fußpedale in Tätigkeit zu setzen, um das Kraftfahrzeug beispielsweise durch zunehmende Kraftstoffzufuhr zum Antriebsmotor zu beschleunigen oder durch Bremsen der Räder abzubremsen. Es ist daher zweckmäßig, Kraftfahrzeuge so auszubilden bzw. umzurüsten, daß der Behinderte bzw. Versehrte diese Tätigkeiten auch manuell ausüben kann. In Anbetracht der jedoch auch für andere Zwecke bestimmten manuell betätigbaren Hebel, wie Schalthebel und dergleichen, neben der Lenkradbetätigung ist es jedoch höchst unerwünscht, daß der Behinderte allzuviele verschiedene manuell betätigbare Hebel zu betätigen hat, um das Kraftfahrzeug sicher im Kraftverkehr zu betreiben. So ist Behinderten oft die Bedienung von Kraftfahrzeugen verwehrt.

Der Erfindung liegt die Aufgabe zugrunde, ein Steuersystem der eingangs genannten Gattung dahingehend zu verbessern, daß trotz einfachen Aufbaus des Kraftfahrzeuges die Bedienung desselben durch Behinderte leicht möglich ist, ohne die individuelle Bewegungsfreiheit des Behinderten allzusehr zu beschränken und ihn durch allzuviele Hebel zu irritieren.

Die Erfindung besteht darin, daß Hydraulikmotoren, insbesondere hydrostatisch wirksame Motoren, des Hydrauliksystems zum Antrieb, aber auch zum Bremsen von Fahrzeugrädern, und zwar in beiden Fahrrichtungen verwendet sind, und daß der Steuerhebel derart in Abhängigkeit zu einer Hydraulikpumpe bzw. einem hydraulischen Getriebe des Hydrauliksystems steht, daß die Hydraulikpumpe bzw. das hydraulische Getriebe Druckmittel in Abhängigkeit von der Stellung des Steuerhebels so zu den Hydraulikmotoren fördert, daß diese zum Antrieb von Fahrzeugrädern sowohl in Vorwärts- als auch in Rückwärtsrichtung und überdies zum Abbremsen derselben und zum Stillstand - je nach der Steuerhebelstellung - zur Verfügung stehen.

Nach einer besonders vorteilhaften Ausbildung der Erfindung ist der Steuerhebel außerdem in Funktionsverbindung mit dem Steueraggregat für den eigentlichen Antriebsmotor, insbesondere der Drosselklappe des Vergasersystems des Brennstoffmotors, wie eines Otto-Motors, gebracht. Bei dieser Ausbildung der Erfindung wird dann beim Betätigen des Steuerhebels nicht nur das Schluckvolumen bzw. Fördervolumen der Hydraulikpumpe insbesondere stufenlos verstellt, sondern gleichzeitig auch die Drehzahl und/oder das Drehmoment des Antriebsmotors gesteuert.

Da für das Fahrzeug ohnehin ein Hydrauliksystem zur Verfügung steht, ist es in einfacher Weise nach einer Weiterbildung der Erfindung auch möglich, zusätzliche Stellungsänderungsorgane vorzusehen und mit Hilfe des Hydrauliksystems zu betreiben. Dies ist bei Behindertenfahrzeugen besonders wichtig, da beispielsweise zum Ein- oder Aussteigen die Türe zu öffnen bzw. zu schließen, der Wagen und/oder der Sitz zu heben oder zu senken und der Sitz zu drehen bzw. verschwenken ist. Hierdurch kann der Behinderte beispielsweise von einem Rollstuhl aus sehr viel einfacher ohne allzugroße Behinderungen auf dem Sitz des Kraftfahrzeuges Platz nehmen und aus
diesem wiederum in den Rollstuhl übersteigen, ohne auf
fremde Mithilfe angewiesen zu sein.

Mit anderen Worten, erfolgt die Ansteuerung des Antriebs
des Fahrzeugs bezogen auf die Einstellung der Geschwindigkeit sowie Fahrtrichtung im Sinne des Beschleunigens,
Verzögerns und Reversierens des Fahrzeugs durch ein und
dasselbe Bedienungsorgan, nämlich den Steuerhebel. Gasgeben, Kuppeln, Schalten und Bremsen sind mit dem gleichen Steuerhebel durchführbar. Die Drehzahl-/Drehmomentenübertragung auf die Antriebsräder erfolgt auf hydrostatischer Basis und die Geschwindigkeit des Fahrzeugs
ist über die im Schluckvolumen stufenlos einstellbare
Hydraulikpumpe, insbesondere Ölhydraulikpumpe, steuerbar. Falls zwei Fahrzeugräder anzutreiben sind, wird
jedes derselben mit einem Hydraulikmotor, insbesondere
direkt, aber auch über zusätzlich zwischengeschaltete
mechanische Kraftübertragungsmittel, darunter mechanische Übersetzungs- oder Untersetzungsgetriebe verbunden,
wodurch auch ein "hydraulisches Differential" zustandekommt. Die Erfindung sowie weitere Ausbildungen und Verbesserungen derselben sind im folgenden anhand der Zeichnung näher erläutert. Darin zeigen:

Fig. 1 ein schematisches Schaubild des Steuersystems
       und

Fig. 2 ein schematisches Schaubild von Steuerverbindungen, wie sie bevorzugt bei der Erfindung angewendet werden.

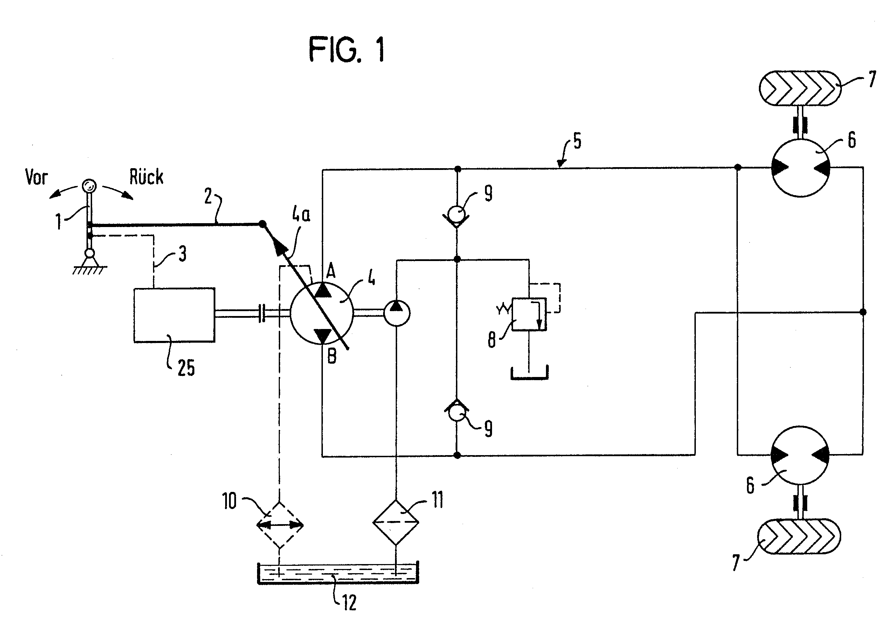

Gemäß Fig.1 befindet sich innerhalb des Kraftfahrzeuges
in Reichweite des auf dem Fahrersitz sitzenden Behinderten ein Steuerhebel 1, der - ausgehend von einer neutralen Nullstellung - insbesondere in zwei Richtungen verschwenkbar ist, nämlich die VOR- und die RÜCK-Richtung.
Über das Gestänge 2, insbesondere einem Bowdenzug, ist eine Steuerverbindung zwischen dem Steuerhebel 1 und dem Verstellhebel 4a einer Hydraulikpumpe 4 hergestellt. Diese Hydraulikpumpe 4 ist zweckmäßigerweise eine Axialkolben-Verstellpumpe, wie sie bei Axialkolben-Getrieben nach dem Schrägscheibenprinzip verwendet wird. Die Hydraulikpumpe 4 ist stufenlos verstellbar hinsichtlich des Fördervolumens mittels des Verstellhebels 4a, der insbesondere auf dem nach außen geführten Schwenkscheibenzapfen befestigbar ist. Über die Druckmittelleitungen des Hydrauliksystems 5 ist das Druckmittel von der Druckmittelpumpe 4 zu den Hydraulikmotoren 6 förderbar, so daß durch Verstellen des Fördervolumens auch die Drehzahl bzw. Drehrichtung der Hydromotoren bzw. Hydraulikmotoren 6 einstellbar sind.

Um den Druck im Hydrauliksystem 5 auf einem Mindestdruck zu halten und dadurch evtl. austretendes Druckmittel, insbesondere Öl, auszugleichen, wird eine Speisepumpe 8 vorgesehen, die den Hauptkreislauf auf einem Mindestdruck von 7bar hält. Um andererseits einen unzulässigen Überdruck zu vermeiden, ist das Überdruckventil 9 eingeschaltet, das bei einem Druck von 150bar anspricht.

Ein Ansaugfilter 11 in der Saugleitung der Speisepumpe 8 filtert die gesamte in den Hauptkreislauf des Hydrauliksystems 5 gelangende als Druckmittel dienende Betriebsflüssigkeit, während das aus dem Kreislauf abfliessende "Lecköl" dem Ölbehälter 12 über einen zwischengeschalteten Wärmetauscher 10 zugeführt werden kann.

Die Hydraulikmotoren 6 sind, wie schematisch im rechten Teil der Fig.1 gezeigt, in "Differentialschaltung" geschaltet und stellen ein "hydraulisches Differential" dar. Zweckmäßigerweise werden langsam laufende Hydromotoren nach dem Roller-Stator-Prinzip verwendet, die auch als "Rotor-Motoren" bekannt sind, und bei denen das Drucklager als Ölumwälzpumpe, d.h. als Pumpe zum Umwälzen des Druckmittels dient. Solche Motoren arbeiten leckölfrei und sind in beiden Drehrichtungen wirksam. Sie arbeiten
mit konstantem Schluckvolumen sowohl im offenen als auch
im geschlossenen Kreislauf.

Als Antriebsmotor 25 dient beispielsweise ein üblicher
Viertakt-Vergaser-Otto-Motor mit 16 PS bzw. 12 kW bei
3600 U/min.

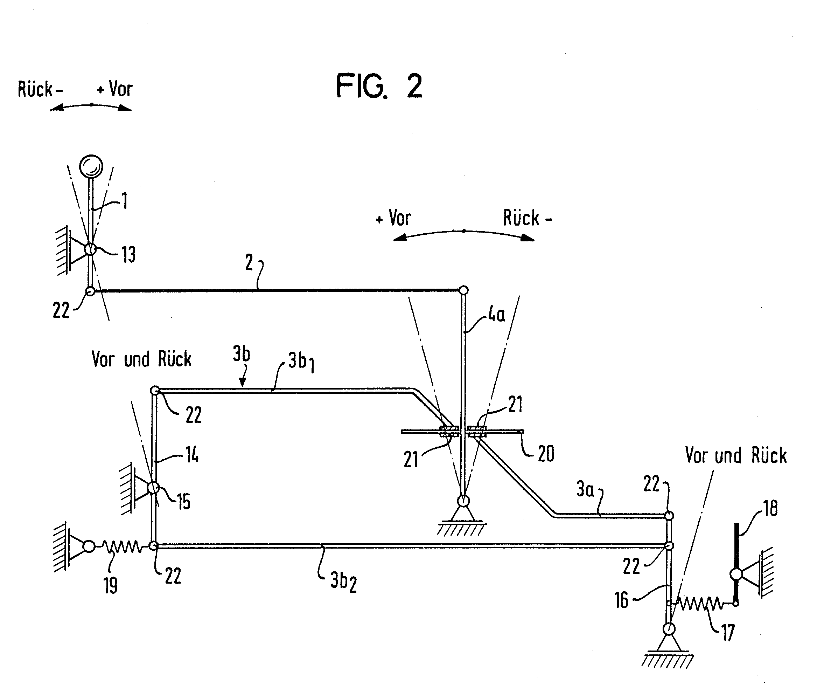

Gemäß Fig.2 ist der Steuerhebel 1, der um das Lager 13
schwenkbar ist, mit Hilfe des Anlenkorganes 22 mit
einem Verbindungsorgan 2, insbesondere einem Bowdenzug,
mit dem Verstellhebel 4a der Hydraulikpumpe 4 mechanisch
verbunden, so daß beim Verschwenken des Steuerhebels 1
in Vorwärtsrichtung (plus VOR) der Verstellhebel 4a in der
in Fig.2 gezeigten Gegenrichtung verschwenkt wird. Hierdurch wird über den lose auf den Dorn 20 des Verstellhebels 4a aufgesteckten Gleitring 21 das Gestänge 3b1 der
Steuerverbindung 3b in der gleichen Richtung verschwenkt,
so daß der Kupplungshebel 14, mit dem das Gestänge 3b1
mittels des Anlenkorgans 22 verbunden ist, in der gleichen Richtung um das Lager 15 verschwenkt wird. Das Gegengestänge 3b2, das am anderen Ende des Hebels 14 mittels des Anlenkorgans 22 befestigt und unter Vorspannung
der Feder 19 gesetzt ist, wird in Gegenrichtung gedrückt,
so daß auch der Fliehkraftregler 16, an dem das Gestänge
3b2 mittels des Anlenkorganes 22 angelenkt ist, in diese
Richtung ausgelenkt wird. Hierdurch wird die Verbindungsfeder 17 beeinflußt, die die Drosselklappe 18 des Vergasers steuert. Die Drosselklappe 18 wird aber in der gleichen Richtung auch dann verschwenkt, wenn der Steuerhebel 1 in die entgegengesetzte Richtung, nämlich in die
Rückrichtung (RÜCK minus) gebracht wird, da dann der Verstellhebel 4a in der in Fig.2 gezeigten entgegengesetzten
RÜCK-Richtung verschwenkt wird und die ebenfalls lose
auf dem Organ 20 des Verstellhebels 4a gelagerten Verbindungselemente, nämlich der mechanischen Steuerverbindung 3a, die am Fliehkraftregler 16 mittels des anderen
Anlenkorgans 22 angelenkt ist, in der selben Richtung
verschwenkt.

Mit anderen Worten, erfolgt die Drosselklappenverstellung
unabhängig davon, ob der Steuerhebel 1 in Vorwärtsrichtung
oder in Rückwärtsrichtung bewegt wird und unabhängig
davon, ob der Verstellhebel 4a in eine dieser beiden Richtungen ausgelenkt wird. Trotz Vorwärts- bzw. Rückwärtssteuerung des Radantriebs ist daher gleichzeitig eine
Drehzahlsteuerung des kraftstoffbetriebenen Antriebsmotors 1, d.h. der Brennkraftmaschine, möglich.

Durch Änderung der Lage und Anordnung der Anlenkpunkte
der Anlenkorgane 22 ist es möglich, die Fahrcharakteristik,
d.h. den Drehzahlanstieg des Antriebsmotors 1 sowie die
Ausschwenkfunktion der Hydraulikpumpe 4, der Charakteristik
des Antriebsmotors anzupassen.

Durch Verwendung des genannten Hydrauliksystems bzw. des
hydrostatischen Getriebes ist außerdem die Möglichkeit
gegeben, durch Rückstellen der Hydraulikpumpe 4 bzw. deren
Verstellhebels 4a in Richtung zur neutralen Nullposition
das Behindertenfahrzeug bis zum Stillstand abzubremsen.

P 31 39 120.6 **0120105**
Frau Katharina Blätte

HJM/Sa
15. Dezember 1982

Neue PATENTANSPRÜCHE

1. Steuersystem für Kraftfahrzeuge, mit einem Steuerhebel zum Steuern des Fahrzeugantriebes, mit einem insbesondere kraftstoffbetriebenen Antriebsmotor zum Erzeugen des Antriebsmomentes, mit einer Bremsanlage zum Bremsen von Fahrzeugrädern und mit einem Druckmittel und eine Hydraulikpumpe bzw. ein hydraulisches Getriebe aufweisendes, insbesondere hydrostatisches Hydrauliksystem, dessen Hydraulikmotoren zum Antrieb von Fahrzeugrädern verwendet sind und der Steuerhebel derart in Steuerabhängigkeit zu dem Hydrauliksystem steht, daß die Fördermenge des Druckmittels steuerhebelstellungsabhängig ist und Vorwärtsantrieb bei Auslenkung des Steuerhebels in einer Richtung sowie Rückwärtsantrieb bei Auslenkung in der Gegenrichtung stattfindet, d a d u r c h g e k e n n z e i c h n e t , daß für Zwecke der Bedienung durch Behinderte die Hydraulikmotoren (6) auch zum Bremsen von Fahrzeugrädern (7) verwendet sind und die Hydraulikpumpe (4) Druckmittel steuerhebelstellungsabhängig zu den Hydraulikmotoren (6) zum Abbremsen und Stillsetzen der Räder (7) fördert.

2. Steuersystem nach Anspruch 1,
   d a d u r c h   g e k e n n z e i c h n e t ,
   daß der Steuerhebel (1) mit einem beidseitig einer
   neutralen Nullstellung auslenkbaren Verstellhebel
   (4a) der Hydraulikpumpe (4) mechanisch verbunden ist.

3. Steuersystem nach Anspruch 2,
   d a d u r c h   g e k e n n z e i c h n e t ,
   daß am Verstellhebel (4a) zwei mechanische Steuerverbindungen (3a, 3b) angreifen, von denen eine Steuerverbindung (3a) beim Auslenken des Verstellhebels (4a)
   im Sinne der Fahrtrichtung des Fahrzeugantriebs und
   die andere Steuerverbindung (3b) beim Auslenken des
   Verstellhebels (4a) in die entgegengesetzte Richtung
   die Drosselklappe (18) für den Antriebsmotor (25) jeweils stärker öffnen.

4. Steuersystem nach Anspruch 3,
   d a d u r c h   g e k e n n z e i c h n e t ,
   daß die eine Steuerverbindung (3a) unmittelbar mit
   dem auf die Drosselklappe (18) einwirkenden Steuerorgan verbunden ist.

5. Steuersystem nach Anspruch 3 oder 4,
   d a d u r c h   g e k e n n z e i c h n e t ,
   daß die andere Steuerverbindung (3b) über eine vorgespannte Umlenkung an dem die Drosselklappe (18) steuernden Steuerorgan angreift.

6. Steuersystem nach einem der vorhergehenden Ansprüche,
   d a d u r c h   g e k e n n z e i c h n e t ,

daß die Steuerverbindungen (2, 3) Gestänge (3b1, 3b2)
und Hebel (14) aufweisen, deren zum Verbinden bzw.
Anlenken aneinander dienende Anlenkorgane (22) zur Änderung der Drehzahl des Antriebsmotors (25) bei gleicher
Kraftstoffzufuhr verstellbar sind.

7. Steuersystem nach einem der vorhergehenden Ansprüche,
   d a d u r c h   g e k e n n z e i c h n e t ,
   daß die Hydraulikmotoren (6) als Ölmotoren ausgebildet
   sind und zur Bildung eines hydraulischen Differentials
   jeweils ein Motor mit einem Fahrzeugrad (7) in Antriebsverbindung steht.

.8. Steuersystem nach einem der vorhergehenden Ansprüche,
   d a d u r c h   g e k e n n z e i c h n e t ,
   daß als Hydraulikmotoren (6) Rotor-Motoren bzw. langsam
   laufende Hydromotoren nach dem Roller-Stator-Prinzip mit
   konstantem Schluckvolumen verwendet sind, bei denen das
   Drucklager als Pumpe zum Umwälzen des Druckmittels dient.

9. Steuersystem nach einem der vorhergehenden Ansprüche,
   d a d u r c h   g e k e n n z e i c h n e t ,
   daß die Hydraulikpumpe (4) in ihrem Fördervolumen bzw.
   im Schluckvolumen und ihrer Drehrichtung stufenlos steuerbar ist.

10. Steuersystem nach einem der vorhergehenden Ansprüche,
    d a d u r c h   g e k e n n z e i c h n e t ,
    daß das Druckmittel des im geschlossenen hydrostatischen
    Kreislauf betriebenen Hydrauliksystems (5) mittels einer
    Speisepumpe (8) auf einen Mindestdruck von etwa 7 bar
    gehalten ist.

11. Steuersystem nach einem der vorhergehenden Ansprüche,
    d a d u r c h   g e k e n n z e i c h n e t ,
    daß das Hydrauliksystem (5) mit einem Überdruckventil
    (9) versehen ist, das den Druckmitteldruck des Hydrauliksystems (5) auf etwa 150 bar begrenzt.

12. Steuersystem nach einem der vorhergehenden Ansprüche,
    d a d u r c h   g e k e n n z e i c h n e t ,
    daß die Hydraulikpumpe (4) eine Axialkolben-Verstellpumpe ist.

13. Steuersystem nach einem der vorhergehenden Ansprüche,
    d a d u r c h   g e k e n n z e i c h n e t ,
    daß das Hydrauliksystem (5) zum Antrieb von Stellungsänderungsorganen dient.

14. Steuersystem nach Anspruch 13,
    d a d u r c h   g e k e n n z e i c h n e t ,
    daß die Stellungsänderungsorgane einen oder mehrere
    der folgenden Aggregate bzw. Verbraucher heben/senken,
    öffnen/schließen, vorschieben/zurückziehen, drehen,
    schwenken und/oder neigen: Radlager; Fahrzeugsitze
    bzw. deren Teile, wie Lehnen; Fahrzeugtüren und Fahrzeugfenster.

15. Steuersystem nach Anspruch 13 oder 14,
    d a d u r c h   g e k e n n z e i c h n e t ,
    daß der Steuerhebel (1) mittels Schaltorganen in
    Steuerabhängigkeit zu Stellungsänderungsorganen bring-
    bar ist.

FIG. 1

FIG. 2

Europäisches
Patentamt

# EUROPÄISCHER RECHERCHENBERICHT

**0120105**

Nummer der Anmeldung

EP 83 10 2930

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-1 464 658 (THE POST OFFICE) <br> * Seite 1, Zeilen 79-92; Seite 2, Zeilen 1-65; Figuren 1-4 * | 1,2 | B 60 K 41/00 <br> B 60 K 41/16 |
| | --- | | |
| A | US-A-3 869 937 (BARRY LOUIS AHRENS) <br> * Figuren 1-6; Zusammenfassung * | 3 | |
| | ----- | | |

| | RECHERCHIERTE SACHGEBIETE (Int. Cl. ³) |
|---|---|
| | B 60 K |

Der vorliegende Recherchenbericht wurde für alle Patentansprüche erstellt.

| Recherchenort <br> DEN HAAG | Abschlußdatum der Recherche <br> 23-11-1983 | Prüfer <br> VANNESTE M.A.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82